# EUROPEAN PATENT SPECIFICATION

(11) **EP 4 095 421 B1**
(45) Date of publication and mention of the grant of the patent: **11.10.2023**
(21) Application number: 22173401.5
(22) Date of filing: 16.05.2022
(51) Int. Cl.: F16K 1/20, F23L 11/00, F23L 13/02

(54) **DAMPER ASSEMBLY**
SCHWENKKLAPPENANORDNUNG
ENSEMBLE DE VANNE PIVOTANTE

(30) Priority: 28.05.2021 FI 20215628
(43) Date of publication of application: 30.11.2022
(73) Proprietor: Valmet Technologies Oy, 02150 Espoo (FI)
(72) Inventor: Päiviö, Pekka, 01480 Vantaa (FI); Hämäläinen, Kalle, 01480 Vantaa (FI); Stipa, Tapani, 01480 Vantaa (FI); Virtanen, Jyrki, 01480 Vantaa (FI); Heimo, Tommi, 01480 Vantaa (FI)
(74) Representative: Boco IP Oy Ab

(56) References cited:
- EP-A2- 0 843 129
- AT-U1- 1 262
- US-A- 4 821 507

## Description

### Field of the invention

The invention relates to damper assembly as defined in the preamble of independent claim 1.

The damper is especially, but not excluding other applications, suitable for use in industrial applications, power plants or the like. In such applications the damper assembly can be configured to in a closed position of a closure member of the damper assembly to isolate a section of a process arrangement downstream of the damper assembly from the process arrangement upstream of the damper assembly. To isolate can for example mean in this context that process gas, flue gas, particles, gas, and/or the like is prevented from passing the damper assembly in the process arrangement. This allows for example to perform maintenance actions on process equipment downstream of the damper assembly. EP97660120 discloses a damper according to the preamble of independent claim 1. US4821507 discloses another example of a known damper.

### Objective of the invention

The object of the invention is to provide a damper assembly that is suitable for use in environments where a high temperature and a high dust content such as a temperature up to 500°C and/or dust over 100 mg/Nm3 prevails.

### Short description of the invention

The damper assembly of the invention is characterized by the definitions of independent claim 1.

Preferred embodiments of the damper assembly are defined in the dependent claims.

### List of figures

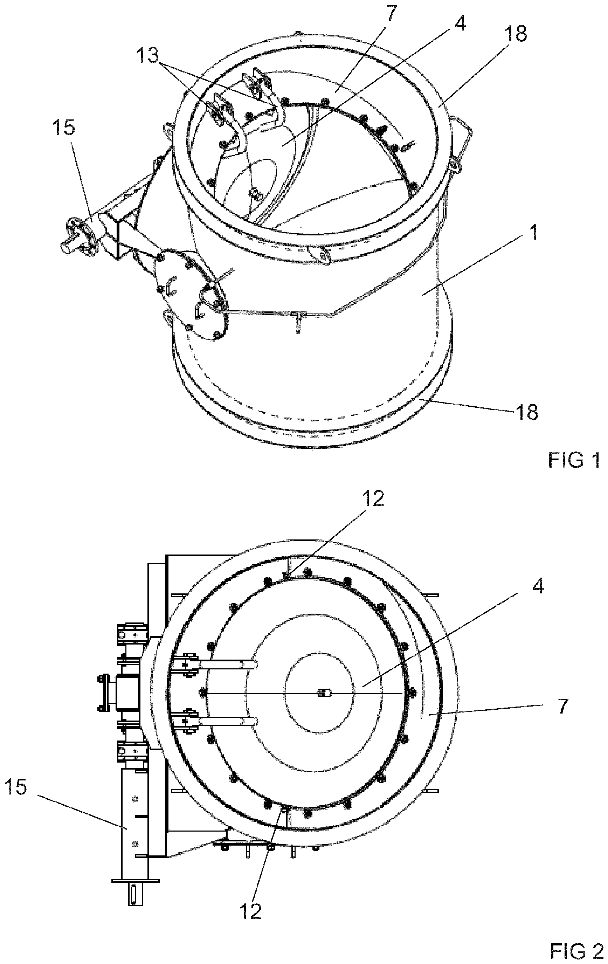

In the following the invention will described in more detail by referring to the figures, of which
Figure 1 shows an embodiment of the damper assembly in a state, where the closure member is in an open position,
Figure 2 shows the damper assembly shown in figure 1 as illustrated from another side and in a state, where the closure member is in a closed position,
Figure 3 is a cut view of the damper assembly shown in figure 1, where the closure member is in an open position,
Figure 4 is a cut view of the damper assembly shown in figure 1, where the closure member is in a closed position, and

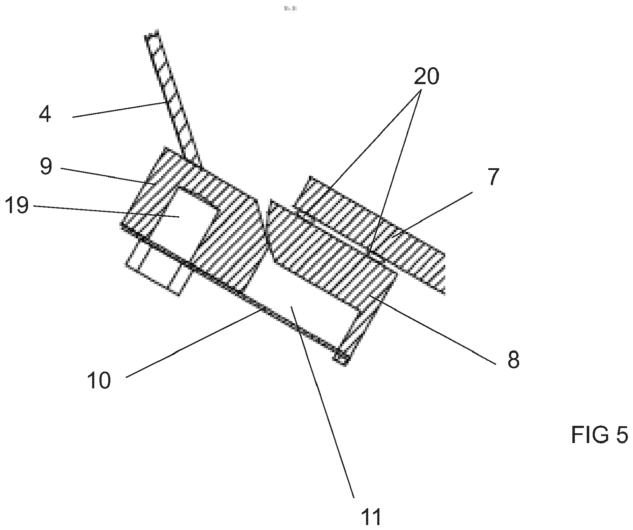

Figure 5 shows DET A of figure 4.

### Detailed description of the invention

Next the damper assembly and some embodiments and variants of the damper assembly will be described in greater detail.

The damper assembly comprising a casing 1 having an inner surface 2 defining a flow channel 3. Flanges 18 can be provided the end of the casing 1 to facilitate connecting of the damper assembly to ducting (not illustrated in the figures).

The damper assembly comprising a closure member 4 mounted for pivotal movement about a pivot axis 5 in and out of the flow channel between a closed position in which it closes the flow channel 3 and an open position.

The damper assembly comprising a sealing arrangement 6 for sealing the flow channel 3 in the closed position of the closure member 4.

The sealing arrangement 6 comprises a first ring member 7 of metal provided at the inner surface 2 of the casing 1 so as to prevent flow of fluid between the first ring member 7 and the inner surface 2 of the casing 1.

The sealing arrangement 6 comprises a first surrounding abutment ring 8 of metal provided at the first ring member 7 of metal.

The sealing arrangement 6 comprises a second surrounding abutment ring 9 of metal provided at the closure member 4 so as to prevent flow of fluid between the second surrounding abutment ring 9 and the closure member 4. The first surrounding abutment ring 8 and the second surrounding abutment ring 9 are configured to abut each other in the closed position of the closure member 4.

The sealing arrangement 6 comprises a second ring member 10 of metal provided at the second surrounding abutment ring 9.

The second ring member 10 and the first surrounding abutment ring 8 are configured to abut each other in the closed position of the closure member 4 so form a surrounding gas space 11 that is defined by the first surrounding abutment ring 8, the second surrounding abutment ring 9 and the second ring member 10.

The sealing arrangement 6 comprises gas feeding means 12 configured to feed pressurized gas into the surrounding gas space 11.

Because the first ring member 7 is of metal, the first surrounding abutment ring 8 is of metal, the second surrounding abutment ring 9 is of metal, and second ring member 10 is of metal, the damper assembly is suitable for use in environments where a high temperature such as a temperature up to 500°C and/or high dust content prevails. Because of the surrounding gas space 11 and because of the gas feeding means 12 configured to feed pressurized gas into the surrounding gas space 11, a sufficient sealing action will be provided.

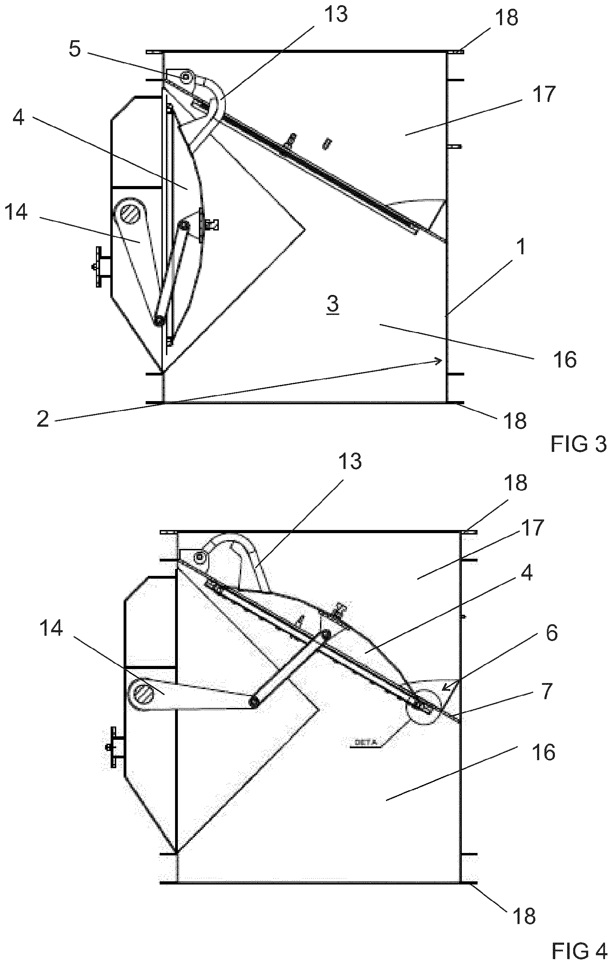

The damper assembly defines preferably, but not necessarily, as in the embodiment of the damper assembly illustrated in the figures, and as shown in figure 4 in the closed position of the closure member 4 an upstream part 16 of the flow channel 3 and a downstream part 17 of the flow channel 3, so that the upstream part 16 of the flow channel 3 is separated from the downstream part 17 of the flow channel 3 by means of the closure member 4 and the sealing arrangement 6. In such case, the gas feeding means 12 is preferably, but not necessarily, configured to feed pressurized gas into the surrounding gas space 11 having a pressure that is at least the pressure in the upstream part 16 of the flow channel 3. This to prevent fluid flow from the upstream part 16 of the flow channel 3 to the downstream part 17 of the flow channel 3 via/through the surrounding gas space 11.

The closure member 4 is, as illustrated in the figures, pivotably attached to the first ring member 7 by means of at least one arm member 13.

The closure member 4 is, as illustrated in the figures, pivotably attached at the inner surface 2 of the casing 1 by means of a linkage arrangement 14 provided between the closure member 4 and the inner surface 2 of the casing 1. A drive means 15 is functionally connected to the linkage arrangement 14 to effect pivotal movement of the closure between the closed position and the open position.

In the damper, the flow channel 3 is essentially unobstructed by the closure member 4, the second ring member 10 and the second surrounding abutment ring 9 in the open position of the closure member 4.

The flow channel 3 has preferably, but not necessarily, a circular cross-section in a direction of flow through the damper assembly.

If the flow channel 3 has a circular cross-section in a direction of flow through the damper assembly, the pivot axis 5 can, as illustrated in the figures, be provided eccentrically with respect to said circular cross-section.

If the flow channel 3 has a circular cross-section in a direction of flow through the damper assembly, the first surrounding abutment ring 8 of metal and the first ring member 7 of metal can, as illustrated in the figures, be provided in an angle with respect to the direction of flow through the damper assembly

The first surrounding abutment ring 8 of metal is preferably, but not necessarily, made of steel.

The second surrounding abutment ring 9 of metal is preferably, but not necessarily, made of steel.

The first ring member 7 of metal is preferably, but not necessarily, made of steel.

The second ring member 10 of metal is preferably, but not necessarily, made of steel, preferably of stainless steel.

The gas feeding means 12 is preferably, but not necessarily, configured to feed pressurized gas into the surrounding gas space 11 through openings extending through the first ring member 7 of metal and through the first surrounding abutment ring 8 of metal.

The damper assembly defines preferably, but not necessarily, as in the embodiment of the damper assembly illustrated in the figures, in the closed position of the closure member 4 an upstream part 16 of the flow channel 3 and a downstream part 17 of the flow channel 3, so that the upstream part 16 of the flow channel 3 is separated from the downstream part 17 of the flow channel 3 by means of the closure member 4 and the sealing arrangement 6. In such embodiment of the damper assembly, the second ring member 10 of the sealing arrangement 6 is preferably, but not necessarily, provided to face the upstream part 16 of the flow channel 3 in the closed position of the closure member 4. In such embodiment of the damper assembly, the first surrounding abutment ring 8 and the second surrounding abutment ring 9 are preferably, but not necessarily, configured to abut each other in the closed position of the closure member 4 so as to allow pressurized gas to pass to the downstream part 17 of the flow channel 3 from the surrounding gas space 11 that is defined by the first surrounding abutment ring 8, the second surrounding abutment ring 9 and the second ring member 10 and/or so as to allow pressurized gas to pass to the upstream part 16 of the flow channel 3 from the surrounding gas space 11 that is defined by the first surrounding abutment ring 8, the second surrounding abutment ring 9 and the second ring member 10.

The second ring member 10 is preferably, but not necessarily, configured to elastically deform in the closed position of the closure member 4.

A sealing means 20 is preferably, but not necessarily, provided between the first ring member 7 and the first surrounding abutment ring 8. The sealing means 20 can for example comprise fiberglass, graphite or the like.

The first ring member 7 is preferably, but not necessarily, fastened to the first surrounding abutment ring 8 by means of bolts 19, screws, or the like.

The second ring member 10 is preferably, but not necessarily, fastened to the second surrounding abutment ring 9 by means of bolts 19, screws or the like.

It is apparent to a person skilled in the art that as technology advanced, the basic idea of the invention can be implemented in various ways. The invention and its embodiments are therefore not restricted to the above examples, but they may vary within the scope of the claims.

## Claims

1. A damper assembly comprising
a casing (1) having an inner surface (2) defining a flow channel (3),
a closure member (4) mounted for pivotal movement about a pivot axis (5) in and out of the flow channel (3) between a closed position in which it closes the flow channel (3) and an open position, and
a sealing arrangement (6) for sealing the flow channel (3) in the closed position of the closure member (4),
wherein the sealing arrangement (6) comprises
a first ring member (7) of metal provided at the inner surface (2) of the casing (1) so as to prevent flow of fluid between the first ring member (7) and the inner surface (2) of the casing (1),
a first surrounding abutment ring (8) of metal provided at the first ring member (7) of metal, and
a second surrounding abutment ring (9) of metal provided at the closure member (4) so as to prevent flow of fluid between the second surrounding abutment ring (9) and the closure member (4), wherein the first surrounding abutment ring (8) and the second surrounding abutment ring (9) are configured to abut each other in the closed position of the closure member (4), the damper assembly being **characterized in that** the sealing arrangement (6) further comprises
a second ring member (10) of metal provided at the second surrounding abutment ring (9), wherein the second ring member (10) and the first surrounding abutment ring (8) are configured to abut each other in the closed position of the closure member (4) so form a surrounding gas space (11) that is defined by the first surrounding abutment ring (8), the second surrounding abutment ring (9) and the second ring member (10), and
gas feeding means (12) configured to feed pressurized gas into the surrounding gas space (11),
wherein the closure member (4) is pivotably attached to the first ring member (7) by means of at least one arm member (13), wherein the closure member (4) is pivotably attached at the inner surface (2) of the casing (1) by means of a linkage arrangement (14) provided between the closure member (4) and the inner surface (2) of the casing (1),
wherein the damper assembly further comprises
a drive means (15) functionally connected to the linkage arrangement (14) to effect pivotal movement of the closure between the closed position and the open position, and
wherein the flow channel (3) is essentially unobstructed by the closure member (4), the second ring member (10) and the second surrounding abutment ring (9) in the open position of the closure member (4).

2. The damper assembly according to claim1, **characterized**
**by** the flow channel (3) having a circular cross-section in a direction of flow through the damper assembly.

3. The damper assembly according to claim 2, **characterized**
**by** the pivot axis (5) being provided eccentrically with respect to said circular cross-section.

4. The damper assembly according to claim 2 or 3, **characterized**
**by** the first surrounding abutment ring (8) of metal and the first ring member (7) of metal being provided in an angle with respect to the direction of flow through the damper assembly

5. The damper assembly according to any of the claims 1 to 4, **characterized**
**by** the first surrounding abutment ring (8) of metal being made of steel.

6. The damper assembly according to any of the claims 1 to 5, **characterized**
**by** the second surrounding abutment ring (9) of metal being made of steel.

7. The damper assembly according to any of the claims 1 to 6, **characterized**
**by** the first ring member (7) of metal being made of steel.

8. The damper assembly according to any of the claims 1 to 7, **characterized**
**by** the second ring member (10) of metal being made of steel, preferably of stainless steel.

9. The damper assembly according to any of the claims 1 to 8, **characterized**
**by** the gas feeding means (12) being configured to feed pressurized gas into the surrounding gas space (11) through openings extending through the first ring member (7) of metal and through the first surrounding abutment ring (8) of metal.

10. The damper assembly according to any of the claims 1 to 9, **characterized**
**by** the damper assembly defining in the closed position of the closure member (4) an upstream part (16) of the flow channel (3) and a downstream part (17) of the flow channel (3), wherein the upstream part (16) of the flow channel (3) is separated from the downstream part (17) of the flow channel (3) by means of the closure member (4) and the sealing arrangement (6),
by the second ring member (10) of the sealing arrangement (6) being provided to face the upstream part (16) of the flow channel (3) in the closed position of the closure member (4), and
by the first surrounding abutment ring (8) and the second surrounding abutment ring (9) being configured to abut each other in the closed position of the closure member (4) so as to allow pressurized gas to pass to the downstream part (17) of the flow channel (3) from the surrounding gas space (11) that is defined by the first surrounding abutment ring (8), the second surrounding abutment ring (9) and the second ring member (10) and/or so as to allow pressurized gas to pass to the upstream part (16) of the flow channel (3) from the surrounding gas space (11) that is defined by the first surrounding abutment ring (8), the second surrounding abutment ring (9) and the second ring member (10).

11. The damper assembly according to claim 10, **characterized by** the gas feeding means (12) being configured to feed into the surrounding gas space (11) pressurized gas having a pressure that is at least the pressure in the upstream part (16) of the flow channel (3).

12. The damper assembly according to any of the claims 1 to 11, **characterized**
**by** the second ring member (10) being configured to elastically deform in the closed position of the closure member (4).

13. The damper assembly according to any of the claims 1 to 12, **characterized**
**by** a sealing means (20) between the first ring member (7) and the first surrounding abutment ring (8).

14. The damper assembly according to any of the claims 1 to 13, **characterized**
**by** the first ring member (7) being fastened to the first surrounding abutment ring (8) by means of bolts (19), screws or the like.

15. The damper assembly according to any of the claims 1 to 14, **characterized**
**by** the second ring member (10) being fastened to the second surrounding abutment ring (9) by means of bolts (19), screws, or the like.

## Patentansprüche

1. Klappenanordnung umfassend
ein Gehäuse (1) mit einer Innenfläche (2), die einen Strömungskanal (3) definiert,
ein Schließelement (4), das montiert ist für eine Schwenkbewegung um eine Schwenkachse (5) in den und aus dem Strömungskanal (3) zwischen einer geschlossenen Stellung, in der es den Strömungskanal (3) verschließt, und einer offenen Stellung, und
eine Dichtungsanordnung (6) zum Abdichten des Strömungskanals (3) in der geschlossenen Stellung des Schließelements (4),
wobei die Dichtungsanordnung (6) umfasst
ein erstes Ringelement (7) aus Metall, das an der Innenfläche (2) des Gehäuses (1) vorgesehen ist, um das Strömen von Fluid zwischen dem ersten Ringelement (7) und der Innenfläche (2) des Gehäuses (1) zu verhindern,
einen ersten umlaufenden Anschlagring (8) aus Metall, der am ersten Ringelement (7) aus Metall vorgesehen ist, und
einen zweiten umlaufenden Anschlagring (9) aus Metall, der am Schließelement (4) vorgesehen ist, um das Strömen von Fluid zwischen dem zweiten umlaufenden Anschlagring (9) und dem Schließelement (4) zu verhindern, wobei der erste umlaufende Anschlagring (8) und der zweite umlaufende Anschlagring (9) so ausgelegt sind, dass sie in der geschlossenen Stellung des Schließelements (4) aneinander anstoßen,
wobei die Klappenanordnung **dadurch gekennzeichnet ist, dass** die Dichtungsanordnung (6) ferner umfasst
ein zweites Ringelement (10) aus Metall, das am zweiten umlaufenden Anschlagring (9) vorgesehen ist, wobei das zweite Ringelement (10) und der erste umlaufende Anschlagring (8) so ausgelegt sind, dass sie in der geschlossenen Stellung des Schließelements (4) aneinander anstoßen, um einen umlaufenden Gasraum (11) zu bilden, der durch den ersten umlaufenden Anschlagring (8), den zweiten umlaufenden Anschlagring (9) und das zweite Ringelement (10) definiert ist, und
Gaszuführungsmittel (12), die dazu ausgelegt sind, druckbeaufschlagtes Gas in den umlaufenden Gasraum (11) einzuspeisen,
wobei das Schließelement (4) über mindestens ein Armelement (13) am ersten Ringelement (7) schwenkbar angebracht ist, wobei das Schließelement (4) über eine Gelenkanordnung (14), die zwischen dem Schließelement (4) und der Innenfläche (2) des Gehäuses (1) vorgesehen ist, an der Innenfläche (2) des Gehäuses (1) schwenkbar angebracht ist,
wobei die Klappenanordnung ferner ein Antriebsmittel (15) umfasst, das mit der Gelenkanordnung (14) funktionswirksam verbunden ist, um eine Schwenkbewegung des Verschlusses zwischen der geschlossenen Stellung und der offenen Stellung zu erwirken, und
wobei der Strömungskanal (3) in der offenen Stellung des Schließelements (4) durch das Schließelement (4), das zweite Ringelement (10) und den zweiten umlaufenden Anschlagring (9) im Wesentlichen unblockiert ist.

2. Klappenanordnung nach Anspruch 1, **gekennzeichnet dadurch,**
**dass** der Strömungskanal (3) in einer Durchströmungsrichtung der Klappenanordnung einen kreisrunden Querschnitt aufweist.

3. Klappenanordnung nach Anspruch 2, **gekennzeichnet dadurch,**
**dass** die Schwenkachse (5) exzentrisch zum kreisrunden Querschnitt vorgesehen ist.

4. Klappenanordnung nach Anspruch 2 oder 3, **gekennzeichnet dadurch,**
**dass** der erste umlaufende Anschlagring (8) aus Metall und das erste Ringelement (7) aus Metall abgewinkelt zur Durchströmungsrichtung der Klappenanordnung vorgesehen sind.

5. Klappenanordnung nach einem der Ansprüche 1 bis 4, **gekennzeichnet dadurch,**
**dass** der erste umlaufende Anschlagring (8) aus Metall aus Stahl hergestellt ist.

6. Klappenanordnung nach einem der Ansprüche 1 bis 5, **gekennzeichnet dadurch,**
**dass** der zweite umlaufende Anschlagring (9) aus Metall aus Stahl hergestellt ist.

7. Klappenanordnung nach einem der Ansprüche 1 bis 6, **gekennzeichnet dadurch,**
**dass** das erste Ringelement (7) aus Metall aus Stahl hergestellt ist.

8. Klappenanordnung nach einem der Ansprüche 1 bis 7, **gekennzeichnet dadurch,**
**dass** das zweite Ringelement (10) aus Metall aus Stahl, bevorzugt aus nichtrostendem Stahl, hergestellt ist.

9. Klappenanordnung nach einem der Ansprüche 1 bis 8, **gekennzeichnet dadurch,**
**dass** das Gaszuführungsmittel (12) so ausgelegt ist, dass es druckbeaufschlagtes Gas in den umlaufenden Gasraum (11) durch Öffnungen einspeist, die sich durch das erste Ringelement (7) aus Metall und durch den ersten umlaufenden Anschlagring (8) aus Metall erstrecken.

10. Klappenanordnung nach einem der Ansprüche 1 bis 9, **gekennzeichnet dadurch,**
**dass** die Klappenanordnung in der geschlossenen Stellung des Schließelements (4) einen anströmseitigen Teil (16) des Strömungskanals (3) und einen abströmseitigen Teil (17) des Strömungskanals (3) definiert, wobei der anströmseitige Teil (16) des Strömungskanals (3) über das Schließelement (4) und die Dichtungsanordnung (6) vom abströmseitigen Teil (17) des Strömungskanals (3) getrennt ist,
**dass** das zweite Ringelement (10) der Dichtungsanordnung (6) so vorgesehen ist, dass es in der geschlossenen Stellung des Schließelements (4) dem anströmseitigen Teil (16) des Strömungskanals (3) zugewandt ist, und
**dass** der erste umlaufende Anschlagring (8) und der zweite umlaufende Anschlagring (9) so ausgelegt sind, dass sie in der geschlossenen Stellung des Schließelements (4) aneinander anstoßen, um so zu ermöglichen, dass druckbeaufschlagtes Gas aus dem umlaufenden Gasraum (11), der durch den ersten umlaufenden Anschlagring (8), den zweiten umlaufenden Anschlagring (9) und das zweite Ringelement (10) definiert ist, zum abströmseitigen Teil (17) des Strömungskanals (3) gelangt, und/oder um so zu ermöglichen, dass druckbeaufschlagtes Gas aus dem umlaufenden Gasraum (11), der durch den ersten umlaufenden Anschlagring (8), den zweiten umlaufenden Anschlagring (9) und das zweite Ringelement (10) definiert ist, zum anströmseitigen Teil (16) des Strömungskanals (3) gelangt.

11. Klappenanordnung nach Anspruch 10, **gekennzeichnet dadurch,**
**dass** das Gaszuführungsmittel (12) so ausgelegt ist, dass es in den umlaufenden Gasraum (11) druckbeaufschlagtes Gas mit einem Druck einspeist, der mindestens dem Druck im anströmseitigen Teil (16) des Strömungskanals (3) entspricht.

12. Klappenanordnung nach einem der Ansprüche 1 bis 11, **gekennzeichnet dadurch,**
**dass** das zweite Ringelement (10) so ausgelegt ist, dass es sich in der geschlossenen Stellung des Schließelements (4) elastisch verformt.

13. Klappenanordnung nach einem der Ansprüche 1 bis 12, **gekennzeichnet**
**durch** ein Dichtungsmittel (20) zwischen dem ersten Ringelement (7) und dem ersten umlaufenden Anschlagring (8).

14. Klappenanordnung nach einem der Ansprüche 1 bis 13, **gekennzeichnet dadurch,**
**dass** das erste Ringelement (7) über Bolzen (19), Schrauben oder dergleichen am ersten umlaufenden Anschlagring (8) befestigt ist.

15. Klappenanordnung nach einem der Ansprüche 1 bis 14, **gekennzeichnet dadurch,**
**dass** das zweite Ringelement (10) über Bolzen (19), Schrauben oder dergleichen am zweiten umlaufenden Anschlagring (9) befestigt ist.

## Revendications

1. Ensemble de clapet comprenant
un boîtier (1) comportant une surface intérieure (2) définissant un canal d'écoulement (3), un membre de fermeture (4) monté pour un mouvement pivotant autour d'un axe de pivotement (5) dans le et hors du canal d'écoulement (3) entre une position fermée, dans laquelle il ferme le canal d'écoulement (3), et une position ouverte, et
un agencement d'étanchéité (6) pour étancher le canal d'écoulement (3) dans la position fermée du membre de fermeture (4),
ledit agencement d'étanchéité (6) comprenant
un premier membre annulaire (7) en métal prévu à la surface intérieure (2) du boîtier (1) de manière à empêcher l'écoulement d'un fluide entre le premier membre annulaire (7) et la surface intérieure (2) du boîtier (1),
un premier anneau de butée périphérique (8) en métal prévu au premier membre annulaire (7) en métal, et
un deuxième anneau de butée périphérique (9) en métal prévu au membre de fermeture (4) de manière à empêcher l'écoulement d'un fluide entre le deuxième anneau de butée périphérique (9) et le membre de fermeture (4), ledit premier anneau de butée périphérique (8) et ledit deuxième anneau de butée périphérique (9) étant configurés pour être en contact entre eux dans la position fermée du membre de fermeture (4),
ledit ensemble de clapet étant **caractérisé en ce que** l'agencement d'étanchéité (6) comprend également
un deuxième membre annulaire (10) en métal prévu au deuxième anneau de butée périphérique (9), ledit deuxième membre annulaire (10) et ledit premier anneau de butée périphérique (8) étant configurés pour être en contact entre eux dans la position fermée du membre de fermeture (4) en formant un espace de gaz périphérique (11) qui est défini par le premier anneau de butée périphérique (8), le deuxième anneau de butée périphérique (9) et le deuxième membre annulaire (10), et
un moyen d'alimentation en gaz (12) configuré pour introduire un gaz sous pression dans l'espace de gaz périphérique (11),
ledit membre de fermeture (4) étant attaché de manière pivotante au premier membre annulaire (7) moyennant au moins un élément de bras (13), ledit membre de fermeture (4) étant attaché de manière pivotante à la surface intérieure (2) du boîtier (1) moyennant un agencement de liaison (14) prévu entre le membre de fermeture (4) et la surface intérieure (2) du boîtier (1),
ledit ensemble de clapet comprenant également un moyen de commande (15) relié de manière fonctionnelle à l'agencement de liaison (14) pour effectuer un mouvement pivotant de la fermeture entre la position fermée et la position ouverte, et
ledit canal d'écoulement (3) étant essentiellement non-obstrué par le membre de fermeture (4), le deuxième membre annulaire (10) et le deuxième anneau de butée périphérique (9), dans la position ouverte du membre de fermeture (4).

2. Ensemble de clapet selon la revendication 1, **caractérisé en ce**
**que** le canal d'écoulement (3) présente une section transversale circulaire dans un sens d'écoulement à travers l'ensemble de clapet.

3. Ensemble de clapet selon la revendication 2, **caractérisé en ce**
**que** l'axe de pivotement (5) est prévu de manière excentrique par rapport à la section transversale circulaire.

4. Ensemble de clapet selon la revendication 2 ou 3, **caractérisé en ce**
**que** le premier anneau de butée périphérique (8) en métal et le premier membre annulaire (7) en métal sont prévus sous un angle par rapport au sens d'écoulement à travers l'ensemble de clapet.

5. Ensemble de clapet selon l'une des revendications 1 à 4, **caractérisé en ce**
**que** le premier anneau de butée périphérique (8) en métal est fait d'acier.

6. Ensemble de clapet selon l'une des revendications 1 à 5, **caractérisé en ce**
**que** le deuxième anneau de butée périphérique (9) en métal est fait d'acier.

7. Ensemble de clapet selon l'une des revendications 1 à 6, **caractérisé en ce**
**que** le premier membre annulaire (7) en métal est fait d'acier.

8. Ensemble de clapet selon l'une des revendications 1 à 7, **caractérisé en ce**
**que** le deuxième membre annulaire (10) en métal est fait d'acier, préférablement d'acier inoxydable.

9. Ensemble de clapet selon l'une des revendications 1 à 8, **caractérisé en ce**
**que** le moyen d'alimentation en gaz (12) est configuré pour introduire un gaz sous pression dans l'espace de gaz périphérique (11) à travers des orifices qui s'étendent à travers le premier membre annulaire (7) en métal et à travers le premier anneau de butée périphérique (8) en métal.

10. Ensemble de clapet selon l'une des revendications 1 à 9, **caractérisé en ce**
**que** l'ensemble de clapet, dans la position fermée du membre de fermeture (4), définit une partie amont (16) du canal d'écoulement (3) et une partie aval (17) du canal d'écoulement (3), ladite partie amont (16) du canal d'écoulement (3) étant séparée de la partie aval (17) du canal d'écoulement (3) par le membre de fermeture (4) et l'agencement d'étanchéité (6),
**que** le deuxième membre annulaire (10) de l'agencement d'étanchéité (3) est prévu pour être tourné vers la partie amont (16) du canal d'écoulement (3) dans la position fermée du membre de fermeture (4), et
**que** le premier anneau de butée périphérique (8) et le deuxième anneau de butée périphérique (9) sont configurés pour être en contact entre eux dans la position fermée du membre de fermeture (4) afin de permettre au gaz sous pression de passer de l'espace de gaz périphérique (11) qui est défini par le premier anneau de butée périphérique (8), le deuxième anneau de butée périphérique (9) et le deuxième membre annulaire (10) vers la partie aval (17) du canal d'écoulement (3) et/ou afin de permettre au gaz sous pression de passer de l'espace de gaz périphérique (11) qui est défini par le premier anneau de butée périphérique (8), le deuxième anneau de butée périphérique (9) et le deuxième membre annulaire (10) vers la partie amont (16) du canal d'écoulement (3).

11. Ensemble de clapet selon la revendication 10, **caractérisé en ce**
**que** le moyen d'alimentation en gaz (12) est configuré pour introduire un gaz sous pression dans l'espace de gaz périphérique (11) avec une pression qui est au moins égale à la pression dans la partie amont (16) du canal d'écoulement (3).

12. Ensemble de clapet selon l'une des revendications 1 à 11, **caractérisé en ce**
**que** le deuxième membre annulaire (10) est configuré pour subir une déformation élastique dans la position fermée du membre de fermeture (4).

13. Ensemble de clapet selon l'une des revendications 1 à 12, **caractérisé**
**par** un moyen d'étanchéité (20) entre le premier membre annulaire (7) et le premier anneau de butée périphérique (8).

14. Ensemble de clapet selon l'une des revendications 1 à 13, **caractérisé en ce**
**que** le premier membre annulaire (7) est attaché au premier anneau de butée périphérique (8) au moyen de boulons (19), vis ou similaire.

15. Ensemble de clapet selon l'une des revendications 1 à 14, **caractérisé en ce**
**que** le deuxième membre annulaire (10) est attaché au deuxième anneau de butée périphérique (9) au moyen de boulons (19), vis ou similaire.
